(19) Europäisches Patentamt
European Patent Office
Office européen des brevets

(11) Veröffentlichungsnummer: **0 231 488**
**A1**

(12) # EUROPÄISCHE PATENTANMELDUNG

(21) Anmeldenummer: **86117292.2**

(22) Anmeldetag: **11.12.86**

(51) Int. Cl.⁴: **A01N 59/24** ,
//(A01N59/24,47:18,37:36,37:20-
,33:20)

(30) Priorität: **23.12.85 DD 284964**
**23.07.86 DD 292770**
**15.08.86 DD 293658**
**15.08.86 DD 293659**
**15.08.86 DD 293657**

(43) Veröffentlichungstag der Anmeldung:
**12.08.87 Patentblatt 87/33**

(84) Benannte Vertragsstaaten:
**BE DE ES FR GB IT NL**

(71) Anmelder: **BAYER AG**
**Konzernverwaltung RP Patentabteilung**
**D-5090 Leverkusen 1 Bayerwerk(DE)**

(72) Erfinder: **Weuffen, Wolfgang, Prof. Dr.**
**Haus 39 Guest**
**DD-2200 Diedrichshagen(DD)**
Erfinder: **Burth, Ulrich, Dr.**
**Im Kamp 72**
**DD-1532 Kleinmachnow(DD)**
Erfinder: **Jahn, Marga, Dr.**
**Grasweg 21**
**DD-1532 Kleinmachnow(DD)**
Erfinder: **Müller, Rainer, Dr.**
**Lupinenschlag 11**
**DD-1532 Kleinmachnow(DD)**
Erfinder: **Motte, Günter, Dr.**
**Nansenstrasse 18**
**DD-1500 Potsdam(DD)**
Erfinder: **Stachewicz, Hans- Erich, Dr.**
**Leninallee 1**
**DD-1532 Kleinmachnow(DD)**
Erfinder: **Adam, Christiane, Dr.**
**Kalininring 53**
**DD-2200 Greifswald(DD)**
Erfinder: **Kramer, Axel, Dr.**
**Georg-Engel-Strasse 20**
**DD-2200 Greifswald(DD)**
Erfinder: **Below, Harald, Dipl.-Chem.**
**Loissinger Wende 1 A**
**DD-2200 Greifswald(DD)**
Erfinder: **Tesche, Manfred, Prof. Dr.**
**Ernst-Thälmann-Strasse 11**
**DD-8223 Tharandt(DD)**
Erfinder: **Müller, Petra, Dr.**
**Winzerweg 14**
**DD-1532 Kleinmachnow(DD)**

EP 0 231 488 A1

(54) **Mittel zur Beizung von Pflanzkartoffeln.**

(57) Die Erfindung betrifft die Verwendung von bekannten Thiocyanaten allein oder in Kombination mit Fungiziden und gegebenenfalls mit Bakteriziden und ein Verfahren zur Beizung von Pflanzkartoffeln zwecks temporärer Keimhemmung, Förderung der Wundabschlußreaktion, Toleranzerhöhung gegenüber verschiedenartigen Streßsituationen und Senkung von Verlusten durch Lagerfäulen.

# Mittel zur Beizung von Pflanzkartoffeln

Die Erfindung betrifft die Verwendung von bekannten Thiocyanaten allein oder in Kombination mit Fungiziden und gegebenenfalls mit Bakteriziden zur Beizung von Pflanzkartoffeln. Die Beizung erfolgt zwecks temporärer Keimhemmung, Förderung der Wundabschlußreaktion, Toleranzerhöhung gegenüber verschiedenartigen Streßsituationen und Senkung von Verlusten durch Lagerfäulen.

Nutzpflanzen sind in der landwirtschaftlichen Produktion verschiedenartigen Streßbedingungen wie Verletzungen, Dürre, Frost, Herbizidanwendungen u.a. ausgesetzt. Der Einfluß der verschiedenartigen Streßsituationen verhindert die Ausschöpfung des Ertragspotentials der Kulturpflanzen. Die Einführung neuer Produktionsverfahren im Kartoffelbau ist durch eine Zunahme des Mechanisierungsgrades wie z.B. dem Einsatz von Vollerntemaschinen gekennzeichnet. Dadurch werden Verletzungen der Kartoffelknollen verursacht, die Eintrittspforten für verschiedenartige Schaderreger sind.

Aufgrund dieser Situation wird ein verstärktes Auftreten von Lagerfäulen und Auflaufkrankheiten beobachtet, so daß die Erhöhung und Stabilisierung der Erträge sowie die Verbesserung der Kartoffelqualität auch weiterhin eine große wirtschaftliche Bedeutung hat. Für die chemische Bekämpfung dieser Schaderreger kam es zur Entwicklung von Beizverfahren, über deren Stand speziell zur Beizung von Pflanzkartoffeln von BURTH u.a. berichtet wird (vgl. Nachr.-Bl. Pflanzenschutz DDR, 36 (1982), S. 10-13).

So ist bekannt, daß zur Beizung bekannte Fungizide, wie z.B. Benzimidazolderivate oder Metalaxyl häufig in Kombination mit Bakteriziden, wie Chloramphenicol oder Bronopol vorgeschlagen werden (vgl. DD 78 423, 84 958, 107 204, 110 423, 130 427, 133 885 und 218 262).

Bei der Beizung von Kartoffeln gegenüber pilzlichen und bakteriellen Schaderregern wird lediglich ein Wirkungsgrad von 50 bis 70 % erreicht.

Weiterhin ist die Anwendung chemischer Keimhemmungsmittel zur zeitweisen oder dauernden Unterbindung des Keimwachstums an lagernden Kartoffeln bekannt. Die Wirkstoffe werden zum Teil auf das Kartoffelkraut appliziert, als Beizmittel vor der Lagerung sowie als Gas, Aerosol, Kondensat oder in der flüssigen Phase während der Lagerung angewendet. Dabei werden Verbindungen z.B. wie Isopropyl-N-(3-chlorphenyl)-carbamat, Maleinsäurehydrazid, α-Naphthyl-essigsäure-methylester, α-Menophthylether, Tetrachlornitrobenzol, Trimethyl hexanol, α-Chlornaphthalin, Dimethylnaphthalin und verschiedene einwertige, geradkettige Alkohole der Kettenlängen von $C_9$ bis $C_{23}$ eingesetzt.

Die zur Zeit bekannten Verfahren zur temporären Keimhemmung von Pflanzkartoffeln befriedigen noch nicht. Verschiedene chemische Verbindungen verschlechtern z.B. den Pflanzenaufgang und verursachen Ertragsverluste. Ein erheblicher Nachteil besteht auch in der starken Förderung von Lagerfäulen, die zu Pflanzgutverlusten führen. Bei der Anwendung von chemischen Verbindungen als Gase oder Aerosole sind häufig in der Lagerperiode mehrere Behandlungen notwendig. Dabei kommen häufig leichtentzündbare Substanzen, wie Alkohole kurzer bis mittlerer Kettenlänge zur Anwendung, die durch das entstehende Alkoholluftgemisch eine erhebliche Brand-Explosionsgefahr hervorrufen.

Für die Überwindung von Streßsituationen stehen außer vorbeugenden, aber häufig unzureichend wirksamen acker-und pflanzenbaulichen Maßnahmen keine praktikablen technischen Lösungen zur Verfügung, so daß die Suche nach neuen Wegen im Vordergrund der Bemühungen steht. Weiterhin ist bekannt, daß Salze der Thiocyansäure zu verschiedenartigen Effekten an der Pflanze führen. Es wurde z.B. zur Wirkungsverstärkung von Herbiziden die Kombination mit Thiocyanaten vorgeschlagen (vgl. EP 0 038 948).

Herbizide Effekte dieser Substanzen werden u.a. zur Defoliation von Lupinen bzw. zur Krautabtötung von Kartoffeln ausgenutzt. Weiterhin ist bekannt, daß einige Thiocyanate das Pflanzenwachstum landwirtschaftlicher Nutzpflanzen unter bestimmten Bedingungen beschleunigen können. Kombinationen von Thiocyanaten mit anderen Wachstumsregulatoren (z.B. Gibberelline und Thioharnstoff) sind zur Brechung der Keimruhe von Kartoffelknollen nach der Ernte bekannt. Ferner ist bekannt, daß nach Boden-oder Sproßbehandlung von Kulturpflanzen mit Thiocyanaten deren Resistenzniveau gegenüber Phytopathogenen erhöht werden kann.

Ziel der Erfindung ist es, die Nachteile bekannter Beizmittel für Pflanzkartoffeln zu beseitigen.

Der Erfindung liegt die Aufgabe zugrunde, geeignete Mittel und Verfahren für die Beizung von Pflanzkartoffeln zu suchen, die bei Anwendung allein oder in Wirkstoffkombination eine temporäre Keimhemmung, eine Förderung der Wundabschlußreaktion sowie eine Toleranzerhöhung gegenüber Streßsituationen bewirken und eine Senkung von Verlusten durch Lagerfäulen ermöglichen.

Es wurde gefunden, daß bekannte Thiocyanate, vorzugsweise dissoziierende Thiocyanate wie Natrium-, Kalium und Ammoniumsalze, in üblicher Formulierung allein oder in Kombination mit verschiedenartigen Fungiziden und im Bedarfsfall mit Bakteriziden sich besonders gut zur Verwendung als Beizmittel von Pflanzkartoffeln eignen.

Die erfindungsgemäße Verwendung von Thiocyanaten verursacht eine temporäre Keimhemmung, eine Förderung der Wundabschlußreaktion bei Verletzungen der Kartoffelknollen und eine Toleranzerhöhung gegenüber Streßsituationen bei gleichzeitiger Senkung der Verluste durch Lagerfäulen. Der vorteilhafte Effekt dieser erfindungsgemäßen Beizung von Pflanzkartoffeln kann dann erreicht werden, wenn die Verwendung dissoziierender Thiocyanate allein oder dissoziierender Thiocyanate mit einem Fungizid und im Bedarfsfall zusätzlich mit einem Bakterizid im Verhältnis 100:1 bis 1:250, vorzugsweise im Verhältnis 50:1 bis 1:20, erfolgt.

Die erfindungsgemäße Beizung von Pflanzkartoffeln bewirkt eine Stabilisierung bei der Lagerung. Durch die Kombination von dissoziierenden Thiocyanaten mit Fungiziden z.B. aus der Acetylalaninestergruppe, genannt sei z.B. Metalaxyl der Formel (I)

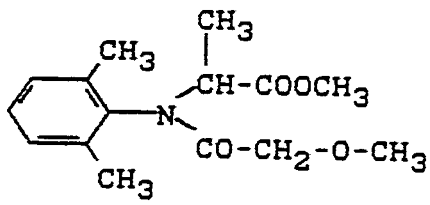

(I)

mit der chemischen Bezeichnung DL-N-(2,6-Dimethylphenyl)-N-(2'-methoxyacetyl)-alanin-methylester und aus der Klasse der Benzimidazole das Carbendazim der Formel (II)

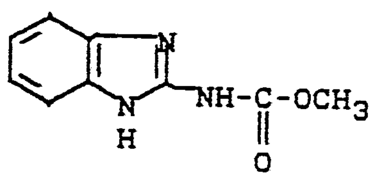

(II)

mit der chemischen Bezeichnung 2-(Methoxy-carbonylamino-benzimidazol sowie gegebenenfalls mit einem Bakterizid, wie z.B. Chloramphenicol der Formel (III)

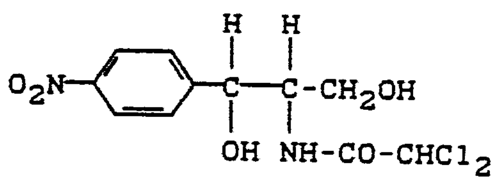

(III)

mit der chemischen Bezeichnung D(-)-threo-1-p-Nitrophenyl-2-dichloracetamido-propandiol-(1,3), oder
Bronopol der Formel (IV)

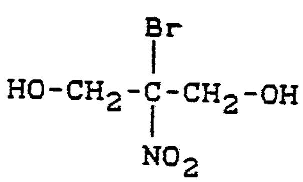

(IV)

mit der chemischen Bezeichnung 2-Brom-2-nitro-1,3-propandiol wird zusätzlich eine Verbesserung in der Wirksamkeit gegenüber Pilzen aus der Gruppe der Oomyceten, Asco-und Basidiomyceten sowie in der Wirksamkeit gegen Bakterienarten, wie Erwinia spp. erreicht.

Die Mischungsverhältnisse von Fungiziden zu Bakteriziden betragen bei der erfindungsgemäßen Verwendung der Wirkstoffkombination I:II:III von 5:25:1 bis 2:100:1 bzw. I:II:IV von 1:5:1 bis 1:50:3.

Zur Erzielung eines für die Praxis vorteilhaften Effektes können dissoziierende Thiocyanate als Kombinationspartner in Formulierungen mit Fungiziden und gegebenenfalls mit Bakteriziden verwendet oder in Tankmischungen eingesetzt werden.

Bei der Verwendung kommen zwischen 0,1 und 98 Masse-% Wirkstoff bzw. die Wirkstoffkombination, vorzugsweise zwischen 15 und 65 Masse-% und/oder flüssigen Träger-und Zusatzstoffen sowie Tensiden zum Einsatz.

Es können in üblicher Weise die für die Beizung zweckmäßigen Formulierungen, wie beispielsweise benetzbare Pulver oder wäßrige Suspensionskonzentrate angewendet werden. Die Applikation erfolgt in bekannter Art, vorzugsweise unmittelbar nach der Ernte oder vor dem Auspflanzen der Kartoffeln im Tauch-oder Schlämmbeizverfahren bzw. im Sprüh-oder Feinsprühverfahren. Zur Behandlung von Kartoffeln kommen im allgemeinen zwischen 1,5 g bis 2,5 kg Wirkstoff/t, vorzugweise 10 g bis 250 g Wirkstoff/t, zur Verwendung.

Ausführungsbeispiele

Die ausgewählten Ausführungsbeispiele sollen die Erfindung erläutern ohne sie einzuschränken.

Beispiel 1

Wirkung von Kaliumthiocyanat in Kombination mit Metalaxyl auf den Keimbefall an Kartoffeln der Sorte "Adretta" nach künstlicher Inokulation der Knollen mit Phytophthora infestans

Kartoffelknollen wurden mit einer Kombination von Kaliumthiocyanat mit Metalaxyl (Kaliumthiocyanat:Metalaxyl 1:2,5) im Naßbeizverfahren behandelt. Nach künstlicher Infektion der Knollen wurde der Keimbefall unter Laborbedingungen nach 15 Tagen beurteilt. Es wurde ein deutlicher Effekt der Kombination von Kaliumthiocyanat mit Metalaxyl auf den Keimbefall mit Phyophthora infestans gefunden.

Tabelle 1

| Wirkstoff | Anwendungskonzentration | Keimlingsbefall mit Phytophthora infestans |
|---|---|---|
| Kontrolle | - | 100 % |
| Metalaxyl | 0,25 % | 18 % |
| KSCN<br>+ Metalaxyl | 0,10 %<br>+ 0,25 % | 0 % |

Beispiel 2

Temporäre Keimhemmung an Pflanzkartoffeln in einem Lagerversuch bei Bewertung der Keimzahl und Keimmasse

Kartoffelknollen der Sorte "Adretta" wurden im Naßbeizverfahren nach der Ernte (20.09.1985) auf der Wirkstoffbasis von Kaliumthiocyanat mit einem Wirkstoffaufwand von 100 g/t behandelt. Zusätzlich erfolgte eine Kombination von Kaliumthiocyanat mit dem Fungizid Carbendazim der Formel (I) und dem Bakterizid Bronopol der Formel (IV). Zur Auswertung wurde an 3 Terminen (10.04.; 06.05. und 12.05.1986) die Anzahl der Keime und die Keimmasse bestimmt. Es konnte eine deutliche Reduzierung der Keimmasse beobachtet werden, ohne daß die Anzahl der Keime verringert wurde. Nach dem Auspflanzen wurde weder der Auflauf noch die Entwicklung des Pflanzenbestandes negativ beeinflußt.

Tabelle 2

Ermittlung der Anzahl der Keime und der Keimmasse zur Zeit der Auslagerung nach Herbstbehandlung

| Wirkstoff | Aufwandmenge g/t | Anzahl Keime (%) 10.04. | 06.05. | 13.05. | Keimmasse (%) 10.04. | 06.05. | 13.05. |
|---|---|---|---|---|---|---|---|
| unbehandelte Kontrolle | - | 100 | 100 | 100 | 100 | 100 | 100 |
| Kaliumthiocyanat | 100 | 100 | 121 | 120 | 13 | 16 | 17 |
| Carbendazim<br>+ Bronopol | 120<br>12 | 98 | 97 | 96 | 93 | 99 | 92 |
| Kaliumthiocyanat<br>+ Carbendazim<br>+ Bronopol | 100<br>120<br>12 | 107 | 130 | 131 | 20 | 20 | 25 |

Beispiel 3

Förderung der Wundabschlußreaktion an der Kartoffelknolle bei Bewertung der Peridermschichtenbildung

Zur Versuchsdurchführung wurde Kaliumthiocyanat auf verletzte Kartoffelknollen (Sorte "Adretta") in wäßriger Lösung als Naßbeizung aufgebracht und die Kartoffelknollen bis zur Versuchsauswertung bei 15° C und 80 % rel. Luftfeuchte gelagert. Die Versuchsauswertung erfolgte nach 10 und 15 Tagen durch Ermittlung der Anzahl neugebildeter Peridermschichten. Durch die Behandlung wird die Anzahl neugebildeter Peridermschichten deutlich erhöht.

Tabelle 3

| Wirkstoff | Aufwandmenge pro t | Anzahl neugebildeter Peridermschichten nach 10 Tagen | nach 15 Tagen |
|---|---|---|---|
| Kontrolle | - | 3,2 | 5,4 |
| Kaliumthiocyanat | 100 g | 3,0 | 7,6 |
| Kaliumthiocyanat | 10 g | 4,3 | 6,5 |
| Kaliumthiocyanat | 1 g | - | 6,5 |

Beispiel 4

Förderung der Wundabschlußreaktion an Kartoffelknollen durch Verwendung von Wirkstoffkombinationen bei Bewertung der Peridermschichtenbildung

Zur Versuchsdurchführung wurden die Wirkstoffe Kaliumthiocyanat, Carbendazim der Formel (II) und Chloramphenicol der Formel (III) bzw. Bronopol der Formel (IV) auf verletzte Kartoffelknollen (Sorte "Adretta") in wäßriger Suspension als Naßbeizung aufgebracht und die Kartoffelknollen bis zur Versuchsauswertung bei 15° C und 80 % rel. Luftfeuchte gelagert.

Die Versuchsauswertung erfolgte nach 10 und 15 Tagen durch Ermittlung der Anzahl neugebildeter Peridermschichten. Durch die Behandlung wird die Anzahl neugebildeter Peridermschichten deutlich erhöht.

Tabelle 4

| Wirkstoff | Aufwandmenge pro t | Anzahl neugebildeter Peridermschichten nach 10 Tagen | nach 15 Tagen |
|---|---|---|---|
| Kontrolle | - | 6,5 | 7,2 |
| Kaliumthiocyanat + Carbendazim + Chloramphenicol | 100 g + 120 g + 2,5 g | 8,6 | - |
| Kaliumthiocyanat + Carbendazim + Chloramphenicol | 10 g + 120 g + 2,5 g | 8,8 | - |
| Kaliumthiocyanat + Carbendazim + Bronopol | 100 g + 120 g + 12 g | 7,6 | 8,9 |
| Kaliumthiocyanat + Carbendazim + Bronopol | 10 g + 120 g + 12 g | 7,4 | 8,8 |

Beispiel 5

Wirkung von Kaliumthiocyanat bei Dürrestreß nach Pflanzgutbehandlung von Kartoffelknollen (Sorte "Sola")

Die Versuchsdurchführung erfolgte auf der Basis von Kaliumthiocyanat in wäßriger Suspension als Naßbeizung. Die Kartoffelknollen wurden in Kulturgefäßen unter Freilandbedingungen ausgelegt und nach dem Auflaufen durch Reduzierung der Wassergaben einem Dürrestreß ausgesetzt.

Die vorteilhafte Wirkung der Beizung bei Dürrestreß kann an der Anzahl und Länge der Kartoffeltriebe sowie dem Ertrag beurteilt werden.

Tabelle 5

| Wirkstoff | Aufwand-menge 2) g/t | Anzahl Tiebe 1) | Trieb-länge 1) (cm) | Ertrag (%) |
|---|---|---|---|---|
| Kontrolle | - | 3,92 | 36,93 | 100 |
| Kaliumthiocyanat | 100 | 3,68 | 45,00 | 117 |
| Kaliumthiocyanat | 200 | 4,44 | 43,94 | 100 |

1) Auswertung nach 2 Monaten; $\bar{x}$ von 25 Pflanzen

2) Angaben bezogen auf Wirkstoff

Die erfindungsgemäß zu verwendenden Thiocyanate sind bekannt und käuflich zu erwerrben, ebenso wie die bekannten Fungizide der Formeln (I) und (II) und die Bakterizide der Formeln (III) und (IV) (vgl. weiter vorn angegebene Literatur).

## Ansprüche

1. Verwendung von Thiocyanaten in Formulierung allein oder in Kombination mit Fungiziden und gegebenenfalls mit Bakteriziden zur Beizung von Pflanzkartoffeln.

2. Verwendung von Thiocyanaten gemäß Anspruch 1, wobei es sich um dissoziierende Thiocyanate handelt.

3. Verwendung von Thiocyanaten gemäß den Ansprüchen 1 und 2, wobei es sich um Natrium-, Kalium- und Ammoniumthiocyanat handelt.

4. Verwendung von Thiocyanaten gemäß Anspruch 1, wobei die Fungizide der Benzimidazolgruppe oder der Acetylalaninestergruppe angehören.

5. Verwendung von Thiocyanaten gemäß den Ansprüchen 1 und 4, wobei die Fungizide, Carbendazim oder Metalaxyl sind.

6. Verwendung von Thiocyanaten gemäß Anspruch 1, wobei die Bakterizide Chloramphenicol oder Bronopol sind.

7. Verwendung von Thiocyanaten gemäß Anspruch 1, dadurch gekennzeichnet, daß zur Behandlung Kombinationen von dissoziierenden Thiocyanaten mit Fungiziden und im Bedarfsfall mit Bakteriziden im Verhältnis von 100:1 bis 1:250 eingesetzt werden.

8. Verwendung von Thiocyanaten gemäß Anspruch 7, dadurch gekennzeichnet, daß zur Behandlung Kombinationen von dissoziierenden Thiocyanaten mit Fungiziden und im Bedarfsfall mit Bakteriziden im Verhältnis von 50:1 bis 1:20 eingesetzt werden.

9. Verwendung von Thiocyanaten gemäß Anspruch 1, dadurch gekennzeichnet, daß zur Behandlung zwischen 0,1 und 98 Masse-% Wirkstoff bzw. Wirkstoffkombinationen neben üblichen festen und/oder flüsigen Träger-und Zusatzstoffen sowie Tensiden, eingesetzt werden.

10. Verwendung von Thiocyanaten gemäß Anspruch 9, dadurch gekennzeichnet, daß zur Behandlung zwischen 15 und 65 Mol-% Wirkstoff bzw. Wirkstoffkombinationen neben üblichen festen und/oder flüssigen Träger-und/oder flüssigen Träger-und Zusatzstoffen sowie Tensiden, eingesetzt werden.

11. Verwendung von Thiocyanaten gemäß Anspruch 1, dadurch gekennzeichnet, daß zur Behandlung zwischen 1,5 g bis 2,5 kg Wirkstoff/t eingesetzt werden.

12. Verwendung von Thiocyanaten gemäß Anspruch 1, dadurch gekennzeichnet, daß zur Behandlung zwischen 10 g bis 250 g Wirkstoff/t eingesetzt werden.

13. Mittel zur Beizung von Pflanzkartoffeln, dadurch gekennzeichnet, daß sie dissoziierende Thiocyanate in üblicher Formulierung allein oder in Kombination mit Fungiziden und gegebenenfalls Bakteriziden enthalten.

Europäisches Patentamt

# EUROPÄISCHER RECHERCHENBERICHT

Nummer der Anmeldung

EP 86 11 7292

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CHEMICAL ABSTRACTS, Band 90, Nr. 9, 26. Februar 1979, Seite 129, Zusammenfassung Nr. 67623g, Columbus, Ohio, US; V.I. KURILOV et al.: "Desiccation and potato diseases", ZASHCH. RAST. (MOSCOW) 1978, (10), 40<br>* Insgesamt * | 1-3,9, 10,13 | A 01 N 59/24 //<br>(A 01 N 59/24<br>A 01 N 47:18<br>A 01 N 37:36<br>A 01 N 37:20<br>A 01 N 33:20) |
| Y | Idem<br>--- | 1-13 | |
| D,Y | DD-A- 218 262 (AKADEMIE DER LANDWIRTSCHAFTSWISSENSCHAFTEN)<br>* Patentansprüche; Seite 2, Zeile 9 - Seite 3, Zeile 36; Beispiele 2,3 *<br>--- | 1-13 | |
| A | CHEMICAL ABSTRACTS, Band 100, Nr. 3, 16. Januar 1984, Seite 198, Zusammenfassung Nr. 19189y, Columbus, Ohio, US; N.V. TYKTIN: "Use of growth stimulators in potato cultivation", & IZV. SEV.-KAVK. NAUCHN. TSENTRA VYSSH. SHK., ESTESTV. NAUKI 1983, (3), 25-9<br>* Insgesamt *<br>--- | 1-3,7-9,13 | **RECHERCHIERTE SACHGEBIETE (Int. Cl.4)**<br>A 01 N |
| D,A | DD-A- 110 423 (DR. U. BURTH et al.)<br>* Patentansprüche *<br>--- -/- | 1-13 | |

Der vorliegende Recherchenbericht wurde für alle Patentansprüche erstellt.

| Recherchenort | Abschlußdatum der Recherche | Prüfer |
|---|---|---|
| DEN HAAG | 15-04-1987 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

**EUROPÄISCHER RECHERCHENBERICHT**

Nummer der Anmeldung

EP 86 11 7292

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DD-A- 133 885 (DR. H. LEHMANN et al.)<br>* Patentansprüche; Seite 4, Zeile 1 - Seite 6, Zeile 4 *<br>--- | 1-13 | |
| D,A | EP-A-0 038 948 (J.T. BAKER CHEMICAL CO.)<br>* Patentansprüche 1-4,14 *<br>--- | 1-3,9, 10,13 | |
| A | CHEMICAL ABSTRACTS, Band 76, Nr. 19, 8. Mai 1972, Seite 131, Zusammenfassung Nr. 109014c, Columbus, Ohio, US; K. PIEKARCZYK: "Effectiveness of combined fungicides against Phytophthora infestans on potatoes", & BIUL. INST. OCHR. ROSL. 1971, No. 48, 285-94<br>* Insgesamt *<br>--- | 1-13 | |
| | | | RECHERCHIERTE SACHGEBIETE (Int. Cl.4) |
| A | CHEMICAL ABSTRACTS, Band 96, Nr. 19, 10. Mai 1982, Seite 263, Zusammenfassung Nr. 157261r, Columbus, Ohio, US; T. TAHAR: "Dormancy of potato varieties cultivated in Tunisia. II. Effect of chemical substances", & MEDED. FAC. LANDBOUWWET., RIJKSUNIV. GENT 1981, 46(4), 1137-42<br>* Insgesamt *<br>----- | 1-3,9, 10,13 | |

Der vorliegende Recherchenbericht wurde für alle Patentansprüche erstellt.

| Recherchenort | Abschlußdatum der Recherche | Prüfer |
|---|---|---|
| DEN HAAG | 15-04-1987 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument